# FASCICULE DE BREVET EUROPEEN

(11) **EP 0 965 725 B1**
(45) Date de publication et mention de la délivrance du brevet: **06.10.2004**
(21) Numéro de dépôt: 99490017.3
(22) Date de dépôt: 18.06.1999
(51) Int. Cl.: E06B 9/88

(54) **Dispositif de détection de fin de course d'un organe mobile bi-directionnellement, notamment tambour de volet roulant, et dispositif d'entraînement d'un organe mobile bi-directionnellement équipé d'un tel dispositif de fin de course**
Einrichtung zur Endstellungsanzeige eines bidirektionalen mobilen Elements, insbesondere einer Rolladenwickelwelle, und Antriebsvorrichtung eines bidirektionalen mobilen Elements ausgerüstet mit solcher Endstellungseinrichtung
End of travel detecting device for a bidirectionally mobile element, especially roller shutter drum, and driving device of bidirectionally mobile element equipped with such end of travel device

(30) Priorité: 19.06.1998 FR 9807945
(43) Date de publication de la demande: 22.12.1999
(73) Titulaire: DEPRAT Jean S.A., 59115 Leers (FR)
(72) Inventeur: Sudron, Serge, 59115 Leers (FR)
(74) Mandataire: Duthoit, Michel

(56) Documents cités:
- EP-A- 0 744 524
- EP-A- 0 770 757
- EP-A- 0 822 315
- FR-A- 2 525 832

## Description

La présente invention concerne un dispositif de détection de fin de course d'un organe mobile bi-directionnellement, notamment tambour de volet roulant, muni de moyens de réglage et d'enregistrement de ses positions de fin de course, ainsi qu'un dispositif d'entraînement d'un organe mobile bi-directionnellement équipé d'un tel dispositif de détection de fin de course.

Bien que plus particulièrement prévue pour des applications dans le domaine des volets roulants, l'invention pourra également être utilisée dans tous les domaines de l'activité économique dans lesquels on souhaite limiter entre deux points la course d'un organe mobile bi-directionnellement.

Actuellement, dans le domaine des volets roulants, on connaît différents dispositifs de détection de fin de course du tambour d'entraînement du tablier du volet roulant.

Ils sont constitués, par exemple, de moyens de contrôle mécanique tels que des jeux de réducteur à engrenages entraînés par le tambour du volet roulant et permettant de suivre la trajectoire de celui-ci.

Des moyens de comparaison de la position du tambour avec les positions de fin de course enregistrées autorisent alors la détection des positions dans lesquelles les mouvements du tambour doivent être bloqués.

Cela étant, lors de la mise en place du volet roulant, ou à tout moment ultérieur, il peut être nécessaire de régler les positions de fin de course et on connaît également différentes solutions permettant d'intervenir en ce sens.

Toutefois, il s'agit généralement de montages mécaniques complexes, utilisant le déplacement de pièces mobiles les unes par rapport aux autres pour sélectionner les conditions selon lesquelles des moyens mécaniques de blocage de la rotation du tambour pourront être actionnés.

Un premier inconvénient de tels montages mécaniques est qu'ils sont situés au niveau du tambour et nécessitent en conséquence des interventions difficiles. En effet, les tambours de volets roulants sont généralement dissimulés dans un coffre placé en hauteur et le réglage des fins de course doit être effectué en aveugle.

Un autre inconvénient est qu'ils rendent parfois nécessaire l'intervention des deux opérateurs.

Il est également à noter que l'utilisateur de pièces mécaniques peut signifier une augmentation des risques de casse ou d'usure des moyens employés.

On connaît le document EP-A-0.822.315 concernant un dispositif de commande d'un moteur permettant la détection et la mémorisation des fins de course d'un organe mobile.

L'unité logique de traitement présente deux commutateurs assurant à la fois la sélection du mode de marche du moteur, l'initialisation en mode de programmation et la programmation des fins de course.

Le passage en mode de programmation est initié lorsque les deux commutateurs sont fermés. Le moteur est alors mis hors tension. L'ULT attend que l'opérateur en commutant l'un des deux commutateurs commande au moteur de tourner. Lorsque l'organe mobile arrive en fin de course désiré, le basculement des deux commutateurs en position fermée, pendant un temps donné, signifie à l'ULT la nouvelle position des fins de course.

. Néanmoins, la séquence de programmation est lourde et nécessite l'arrêt du moteur pour des périodes de temporisation. Elle oblige l'opérateur à immobiliser le moteur une première fois lors de la phase d'initialisation en mode programmation, et une deuxième fois pour au moins un temps déterminé, pour signifier au système la nouvelle position de fin de course.

On connaît de même le document EP-A-0.770.757 et le document FR-A-2.525.832 permettant de régler la position des fins de course et dont l'ULT fonctionne dans un mode dit normal et dans un mode de programmation des fins de course.

Néanmoins, tout comme le document EP-A-0.822.315, le passage du mode normal en mode de programmation ne peut être effectué sans provoquer l'arrêt du moteur.

Le but de la présente invention est de proposer un dispositif de détection de fin de course qui pallie les inconvénients précités et permette de réaliser des réglages de leur position à distance.

Un autre but de la présente invention est de proposer un dispositif de détection de fin de course qui permette de réduire les risques de mauvais fonctionnement.

Un autre but de la présente invention est de proposer un dispositif de détection de fin de course dont le réglage puisse être effectué par visualisation réelle des positions dans lesquelles on souhaite bloquer l'organe mobile concerné.

D'autres buts et avantages de l'invention apparaîtront au cours de la description qui va suivre qui n'est donnée qu'à titre indicatif et qui n'a pas pour but de la limiter.

La présente invention concerne un dispositif de détection de fin de course d'un organe mobile bi-directionnellement, notamment tambour de volet roulant, muni de moyens de réglage et d'enregistrement de ses positions de fin de course, ledit dispositif comprenant des moyens moteur d'entraînement de l'organe mobile, des moyens de contrôle de la position de l'organe mobile, des moyens de comparaison de ladite position de l'organe mobile avec les positions de fin de cours enregistrées, et des moyens de traitement numériques aptes à fonctionner selon deux modes différents, l'un dit « normal », l'autre dit de « réglage », lesdits moyens de contrôle étant prévus aptes à donner une image de la position de l'organe sous la forme d'un signal numérisé en entrée des moyens de traitement, et lesdits moyens de réglage comprenant des moyens électriques de sélection du mode d'utilisation des moyens de traitement et des positions de fin de course pour leur mémorisation, lesdits moyens de sélection étant prévus aptes à permettre le réglage des positions de fin de course à la volée, alors que l'organe mobile est actionné, sans arrêt des moyens moteur pour des périodes de temporisation.

L'invention concerne également un dispositif d'entraînement d'un organe mobile bi-directionnellement équipé d'un dispositif de détection de fin de course tel que décrit ci-dessus.

L'invention sera mieux comprise à la lecture de la description suivante, accompagnée des deux dessins en annexe qui illustrent respectivement, sous une forme schématique, un premier et un second exemples du dispositif de détection de fin de course conforme à l'invention.

La présente invention concerne un dispositif de détection de fin de course d'un organe mobile bi-directionnellement notamment tambour de volet roulant, muni de moyens de réglage et d'enregistrement de ses positions de fin de course.

Bien que plus particulièrement prévue pour des applications dans le domaine des volets roulants, elle pourra également être utilisée dans tous les secteurs de l'activité économique dans lesquels on souhaite limiter entre deux points la course d'un organe mobile bi-directionnellement.

Comme illustré, le dispositif de détection de fin de course conforme à l'invention comprend des moyens 1 de contrôle de la position de l'organe mobile et des moyens de comparaison de ladite position de l'organe mobile avec les positions de fin de course enregistrées.

Il comprend également, pour permettre le réglage desdites positions, des moyens de traitement numérique 30, aptes à fonctionner selon deux modes différents, l'un dit « normal » et l'autre dit de « réglage ». Le premier autorise, par exemple, le suivi et le blocage de l'organe mobile lorsqu'il arrive au niveau des positions de fin de course enregistrées tandis que le second autorise, notamment, le réglage et/ou la modification de celles-ci.

Par ailleurs, lesdits moyens de contrôle sont prévus aptes à donner une image de la position de l'organe sous la forme d'un signal numérisé en entrée desdits moyens de traitement 30. Il s'agit, par exemple, de moyens de comptage d'impulsions délivrées par des capteurs magnétiques coopérant avec un champ magnétique, mobile en relation avec ledit organe.

Quant aux moyens de réglage de la position des fins de course, ils comprennent des moyens électriques 18,20 ; 18, 40 de sélection du mode d'utilisation des moyens de traitement 30, lesdits moyens électriques étant en outre prévus aptes à autoriser la sélection des positions de fin de course pour leur mémorisation, lorsque l'organe mobile est arrivé à la position désirée.

L'utilisation d'un signal numérisé pour le suivi des positions de l'organe mobile, de moyens numériques de traitement et de moyens de sélection de nature électrique permet ainsi, par exemple, la réalisation de câblages électriques, autorisant le réglage à distance des positions de fin de course et facilitant les interventions des opérateurs.

Lesdits moyens de traitement 30 sont prévus aptes à réaliser, par exemple, des fonctions de comptage à partir du signal donnant l'image de la position de l'organe. Ils sont munis pour cela, notamment, d'un ou plusieurs compteurs 32.

Lesdits moyens de traitement 30 permettent également, par exemple, la comparaison de la valeur du ou des compteurs 32 avec une valeur correspondant aux positions de fin de course, celles-ci étant prévues stockées, notamment, dans un module mémoire 33.

Lesdits moyens de traitement 30 permettent encore, par exemple, le stockage des valeurs de fin de course réglées dans ledit module mémoire 33 et/ou l'émission d'ordre de blocage de l'organe mobile en cas de correspondance entre les valeurs figurant dans le ou les compteurs 32 et celles stockées dans un module mémoire 33.

Lesdits moyens de traitement 30 sont en outre prévus aptes, par exemple, à autoriser une commutation de leur fonctionnement entre le mode « normal » et le mode « réglage », notamment en utilisant des données d'entrée établies à partir du courant électrique permettant également la mise en mouvement de l'organe mobile.

En mode « normal », lesdits moyens de traitement 30 réalisent ainsi, par exemple, les fonctions de comptage, comparaison des valeurs comptées avec les valeurs de fin de course, et émission d'ordre de blocage en cas de correspondance, tandis qu'en mode « réglage », la fonction de comparaison des valeurs comptées avec les valeurs de fin de course est éventuellement inhibée et remplacée par la fonction de stockage des nouvelles valeurs de fin de course réglées.

Ainsi, en entrée, lesdits moyens de traitement 30 prennent en compte, par exemple, le ou les signaux donnant l'image de la position de l'organe mobile et/ou le ou les signaux déterminant leur mode de fonctionnement. En sortie, ils émettent, par exemple, les ordres de blocage dudit organe mobile.

Lesdits moyens de traitement 30 comprennent, par exemple, un microprocesseur 34 apte à mettre en oeuvre un logiciel permettant la réalisation, notamment, desdites fonctions de comptage, comparaison, stockage, commutation et/ou d'émission d'ordre de blocage.

Lesdits compteurs 32 sont constitués, par exemple, d'un compteur de position de l'organe mobile, d'un compteur de fin de course et/ou d'un compteur de temps.

Afin d'éviter le réglage des positions de fin de course par une indication brute et théorique des valeurs de compteur 32 pour lesquelles l'organe mobile doit être bloqué, lesdits moyens de sélection 18, 20 ; 18, 40 sont prévus aptes à permettre le réglage des positions de fin de course à la volée, c'est-à-dire lors du déplacement réel de l'organe mobile.

Les valeurs mémorisées correspondent alors, par exemple, à la valeur du compteur 32 après l'arrêt dudit organe mobile au niveau de la position que l'on souhaite enregistrer en tant que position de fin de course.

Cela étant, la présente invention concerne également un dispositif d'entraînement d'un organe mobile bi-directionnellement équipé d'un tel dispositif de détection de fin de course.

Ledit dispositif d'entraînement comprend, par exemple, des moyens moteur 10 d'entraînement de l'organe mobile et/ou des moyens de sélection 16 du mode de fonctionnement desdits moyens moteur 10.

Lesdits moyens de sélection 16 du mode de fonctionnement desdits moyens moteur 10 permettent à un opérateur de choisir, par exemple, le sens de déplacement dudit organe mobile et/ou le maintien à l'arrêt de celui-ci.

Selon un mode de réalisation de l'invention correspondant à celui illustré, lesdits moyens de traitement 30 sont connectés par montage en dérivation sur une ligne d'alimentation 35 prévue entre lesdits moyens moteur 10 et lesdits moyens de sélection 16 du mode de fonctionnement desdits moyens moteur 10.

Lesdits moyens de sélection 16 du mode de fonctionnement desdits moyens moteur 10 sont, par exemple, connectés au réseau, repéré 17, et sont, éventuellement, prévus aptes à isoler ladite ligne d'alimentation 35 de celui-ci. On évite ainsi que lesdits moyens 1 de contrôle et/ou de traitement 30 soient en permanence alimentés. De plus, une telle disposition permet, si désirée, de contrôler plusieurs moteurs à partir d'un point de commande unique.

Pour permettre le réglage desdites positions de fin de course, ladite ligne d'alimentation 35 est constituée, par exemple, de deux câbles 12a, 12b permettant chacun, par exemple, l'alimentation desdits moyens moteur 10 pour un fonctionnement selon un sens donné et lesdits moyens 18, 20 ; 18, 40 de sélection du mode de fonctionnement des moyens 30 de traitement numérique et des positions de fin de course sont constitués de moyens de mise sous tension simultanée desdits deux câbles 12a, 12b.

Ladite mise sous tension simultanée est prévue temporaire. Elle cesse, par exemple, lorsque l'organe mobile est arrivé à la position désirée pour définir une position de fin de course.

On peut ainsi disposer de quatre états différents à l'entrée des moyens de traitement 30 permettant alternativement le passage de ces derniers entre le mode de fonctionnement « normal » et le mode de fonctionnement « réglage », ceci pour chacun des sens de déplacement de l'organe mobile, et autorisant le réglage des positions de fin de course aux extrémités de sa trajectoire.

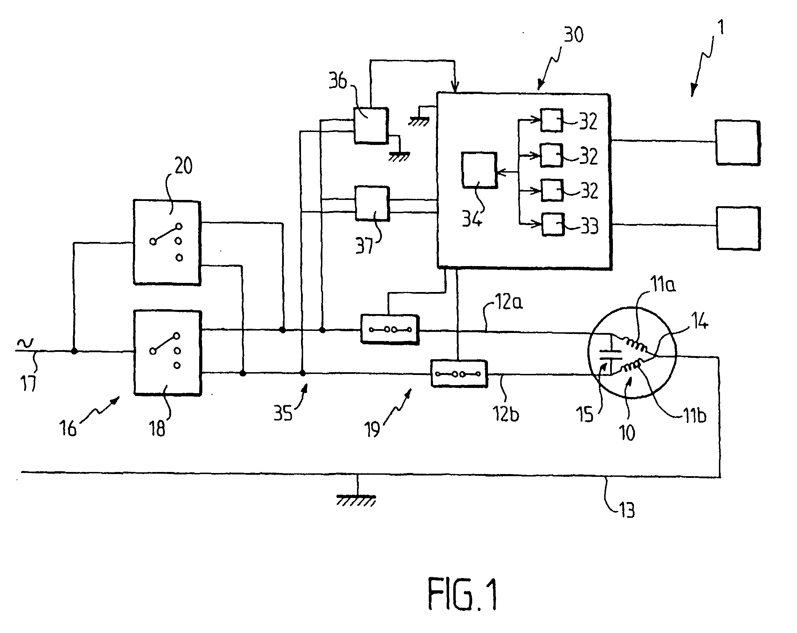

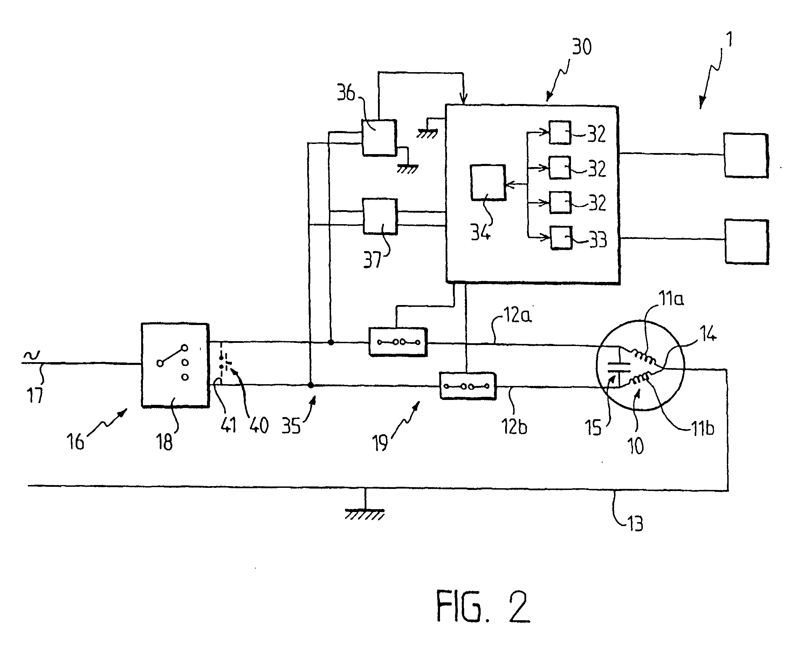

Selon un premier mode de réalisation, lesdits moyens de mise sous tension simultanée desdits deux câbles 12a, 12b comprennent un bouton-poussoir 40 apte à fermer une ligne de court-circuit 41 prévue entre lesdits deux câbles 12a, 12b. Ce premier mode de réalisation des moyens de mise sous tension simultanée des deux câbles 12a, 12b est illustré à la figure 2.

Selon un autre mode de réalisation, illustré en trait plein, il s'agit desdits moyens de sélection 16 du mode de fonctionnement des moyens moteurs 10 prévus, par exemple, dédoublés en parallèle.

Ainsi, selon l'invention, on utilise un outil 20, 40 distinct de l'outil 18 de commande du sens de rotation du moteur, pour passer du mode « normal » en « mode de programmation ».

On dispose de la sorte d'une solution interchangeable puisque, en cas de rénovation, les anciens boutons inverseurs du sens de marche 18 peuvent être conservés.

De plus, on évite les erreurs de programmation trop facilement rencontrés dans les dispositifs ne présentant qu'un seul et même outil pour la commande du moteur et le paramétrage.

Il est également à noter que la solution conforme à l'invention permet une programmation plus rapide et plus souple, à la volée et sans arrêt du moteur pour des périodes de temporisation.

Lesdits moyens moteur 10 sont constitués, notamment, d'un moteur présentant, par exemple, deux enroulements 11a, 11b permettant chacun sa rotation dans un sens donné.

Lesdits enroulements 11a, 11b, sont prévus, notamment, entre un des câbles 12a, 12b, formant une ligne de phase et une ligne de neutre 13, éventuellement connectée à un point commun 14 prévu entre lesdits enroulements 11a, 11b.

Une capacité 15 est, par exemple, prévue au niveau desdits enroulements 11a, 11b entre leurs bornes opposées au point commun 14.

Ledit dispositif d'entraînement comprend en outre, par exemple, des moyens de blocage 19 desdits moyens moteur 10. Ils sont constitués, notamment, d'un organe coupe circuit prévu sur chacun des câbles 12a, 12b.

Ils sont prévus aptes à être déclenchés, par exemple, à partir de l'ordre de blocage éventuellement émis par lesdits moyens de traitement 30.

Lesdits moyens de sélection 16 du mode de fonctionnement desdits moyens moteur 10 et/ou lesdits moyens de sélection 18, 20 ; 18, 40 du mode de fonctionnement des moyens de traitement 30 et des positions de fin de course sont constitués, par exemple, d'un commutateur à trois positions. Celui-ci est situé, notamment, entre le secteur 17 et ladite ligne d'alimentation 35.

Ledit commutateur pourra être constitué, par exemple, pour lesdits moyens 16 de sélection du mode de fonctionnement des moyens moteur 10, d'un bouton inverseur du sens de marche 18, et pour lesdits moyens du mode de sélection des moyens de traitement 30, d'un bouton inverseur 20.

Ils présentent chacun, notamment, une borne reliée au secteur 17 et trois bornes reliables à la ligne d'alimentation 35.

Pour l'inverseur 18, l'une des bornes correspond à un sens de déplacement de l'organe mobile, la seconde à l'autre sens de déplacement de celui-ci et la troisième à l'arrêt des moyens moteur.

Pour le bouton inverseur 20, une première des bornes correspond au mode de réglage d'une première position de fin de course, une seconde au mode de réglage de la seconde position de fin de course et la troisième borne au mode de fonctionnement normal.

A titre d'exemple, pour régler l'une des valeurs de fin de course, l'opérateur actionne l'inverseur 18 pour connecter la ligne de phase 12a avec le secteur et permettre le déplacement de l'organe mobile dans la direction concernée. Simultanément, l'autre ligne de phase 12b est coupée à l'aide du coupe circuit 19 prévu sur celle-ci, comme en mode normal.

L'opérateur actionne ensuite le bouton inverseur 20 ou le bouton-poussoir 40 de manière à connecter le secteur et l'autre ligne de phase 12b.

Les moyens de traitement 30 étant branchés en dérivation sur lesdites lignes de phase 12a, 12b, ils constatent alors l'apparition en entrée d'un état différent de l'état normal, chacune desdites lignes 12a, 12b étant alimentée, au lieu d'une seule, en amont des moyens de blocage 19. Le mode de réglage des fins de course est ainsi actionné, moteur en rotation.

Lorsque l'opérateur juge que l'organe mobile, continuant sa course, aura atteint le point extrême désiré, il pourra alors basculer l'inverseur 18, le bouton inverseur 20, et/ou le bouton-poussoir 40 sur la position correspondant à l'arrêt du moteur et/ou au mode de fonctionnement normal. Le microprocesseur coupera à ce moment le moteur 10 et mettra simultanément en mémoire la valeur du compteur 32 relevée, sans autre action supplémentaire.

Pour le réglage de la position de fin de course opposé, les opérations sont inversées. Si l'on ne souhaite pas la changer, il n'est par contre pas nécessaire de passer de nouveau en mode de programmation.

On constate que l'on réalise bien ainsi un réglage à distance de la position des fins de course et que l'on peut donc éviter toute intervention sur l'organe mobile lui-même.

Ledit dispositif d'entraînement comprend en outre, éventuellement, pour favoriser le fonctionnement desdits moyens de traitement 30, une alimentation stabilisée 36 entre ceux-ci et ladite ligne d'alimentation 35.

Il comprend en outre, éventuellement, des moyens 37 de conversion analogique/numérique prévus entre lesdits moyens de traitement numériques 30 et lesdits moyens de sélection 18, 20 ; 18, 40 du mode de fonctionnement desdits moyens de traitement 30. Lesdits moyens de conversion comprennent, entre autres, un diviseur de tension, un redresseur et/ou un filtre.

Naturellement, d'autres modes de mise en oeuvre, à la portée de l'homme de l'art, auraient pu être envisagés sans pour autant sortir du cadre de l'invention tel que défini dans les revendications.

## Revendications

1. Dispositif de détection de fin de course d'un organe mobile bi-directionnellement, notamment tambour de volet roulant, muni de moyens de réglage et d'enregistrement de ses positions de fin de course, ledit dispositif comprenant des moyens moteur (10) d'entraînement de l'organe mobile, des moyens (1) de contrôle de la position de l'organe mobile, des moyens de comparaison de ladite position de l'organe mobile avec les positions de fin de course enregistrées, et des moyens de traitement numériques (30) aptes à fonctionner selon deux modes différents, l'un dit « normal », l'autre dit de « réglage », lesdits moyens (1) de contrôle étant prévus aptes à donner une image de la position de l'organe sous la forme d'un signal numérisé en entrée des moyens de traitement (30), et lesdits moyens de réglage comprenant des moyens électriques (18, 20 ; 18, 40) de sélection du mode d'utilisation des moyens de traitement (30) et des positions de fin de course pour leur mémorisation, lesdits moyens de sélection (18, 20 ; 18, 40) étant prévus aptes à permettre le réglage des positions de fin de course à la volée, sans arrêt des moyens moteur (10) pour des périodes de temporisation.

2. Dispositif selon la revendication 1, dans lequel lesdits moyens de traitement (30) sont prévus aptes à réaliser des fonctions de :
- comptage à partir du signal donnant l'image de la position de l'organe, au niveau d'un ou plusieurs compteurs (32),
- comparaison de la valeur du ou des compteurs (32) avec une valeur correspondant aux positions de fin de course stockées dans une mémoire (33),
- stockage des valeurs de fin de course réglées dans ladite mémoire (33),
- commutation de leur fonctionnement entre mode « normal » et mode « réglage ».

3. Dispositif selon la revendication 2, dans lequel lesdits moyens de traitement (30) comprennent un microprocesseur (34) apte à mettre en oeuvre un logiciel permettant la réalisation desdits fonctions de comptage, comparaison, stockage et/ou commutation.

4. Dispositif d'entraînement d'un organe mobile bi-directionnellement équipé d'un dispositif de détection de fin de course selon la revendication 1.

5. Dispositif selon la revendication 4, dans lequel lesdits moyens de traitement (30) sont connectés par montage en dérivation sur une ligne d'alimentation (35) prévue entre les moyens moteur (10) d'entraînement de l'organe mobile et des moyens de sélection (16) du mode de fonctionnement desdits moyens moteur (10).

6. Dispositif selon la revendication 5, dans lequel ladite ligne d'alimentation (35) est constituée de deux câbles (12a, 12b) permettant chacun l'alimentation desdits moyens moteur pour un fonctionnement selon un sens donné et lesdits moyens (18, 20 ; 18, 40) de sélection du mode de fonctionnement des moyens (30) de traitement numérique et des positions de fin de course sont constitués de moyens de mise sous tension simultanée desdits deux câbles (12a, 12b).

7. Dispositif selon la revendication 6, dans lequel lesdits moyens de mise sous tension simultanée desdits deux câbles (12a, 12b) comprennent d'un bouton-poussoir (40) apte à fermer une ligne de court-circuit prévue entre lesdits deux câbles (12a, 12b).

8. Dispositif selon la revendication 6 comprenant des moyens de blocage (19) desdits moyens moteur (10) constitués d'un organe coupe-circuit prévu sur chacun des câbles (12a, 12b), apte à être déclenché à partir d'un signal émis par lesdits moyens de traitement (30).

9. Dispositif selon la revendication 5, dans lequel lesdits moyens de sélection (16) du mode de fonctionnement des moyens moteur (10) et/ou lesdits moyens de sélection du mode de fonctionnement des moyens de traitement (30) et des positions de fin de course sont constitués d'un commutateur (18, 20) à trois positions prévu entre le secteur et la ligne d'alimentation (35).

## Patentansprüche

1. Vorrichtung zur Detektion der Endstellung eines in beide Richtungen beweglichen Organs, insbesondere einer Rolladentrommel, die mit Mitteln zur Einstellung und Erfassung seiner Positionen der Endstellung ausgestattet ist, wobei die besagte Vorrichtung Motormittel (10) zum Antrieb des beweglichen Organs, Mittel (1) zur Kontrolle der Position des beweglichen Organs und Mittel zum Vergleich der besagten Position des beweglichen Organs mit den gespeicherten Positionen der Endstellung, und Mittel zur numerischen Verarbeitung (30) umfaßt, die geeignet sind, nach zwei unterschiedlichen Betriebsarten zu funktionieren, von denen die eine als "normal" bezeichnet wird, und die andere als "Einstellung" bezeichnet wird, wobei die besagten Kontrollmittel (1) geeignet vorgesehen sind, um ein Bild von der Position des Organs in Form eines digitalisierten Signals am Eingang der Verarbeitungsmittel zu geben, und die besagten Einstellungsmittel elektrische Mittel (18, 20 ; 18, 40) zur Auswahl der Benutzungsart der Verarbeitungsmittel (30) und der Positionen der Endstellung für ihre Speicherung umfassen, wobei die besagten Auswahlmittel (18, 20 ; 18, 40) geeignet vorgesehen sind, um die Einstellung der Positionen der Endstellung im Flug, ohne Bremsen der Motormittel (10) für Verzögerungsperioden zu erlauben.

2. Vorrichtung nach Anspruch 1, bei der die besagten Verarbeitungsmittel (30) geeignet vorgesehen sind, um folgende Funktionen auszuführen :
- Zählung ausgehend vom Signal, welches das Bild von der Position des Organs im Bereich eines Zählers oder mehrerer Zähler (32) gibt,
- Vergleich des Wertes vom dem Zähler oder den Zählern (32) mit einem Wert, der den Positionen der Endstellung entspricht, die in einem Speicher (33) gespeichert sind,
- Speicherung der eingestellten Werte der Endstellung im besagten Speicher (33),
- Umschaltung ihres Funktionierens zwischen der Betriebsart "normal" und der Betriebsart "Einstellung".

3. Vorrichtung nach Anspruch 2, bei der die besagten Verarbeitungsmittel (30) einen Mikroprozessor (34) umfassen, der geeignet ist, eine Software anzuwenden, erlaubend die Ausführung der besagten Funktionen zwecks Zählung, Vergleich, Speicherung und/oder Umschaltung.

4. Einrichtung zum Antrieb eines in beide Richtungen beweglichen Organs, das mit einer Vorrichtung zur Detektion der Endstellung nach Anspruch 1 ausgestattet ist.

5. Vorrichtung nach Anspruch 4, bei der die besagten Verarbeitungsmittel (30) durch Parallelschaltung an einer Speiseleitung (35) angeschlossen sind, die zwischen den Motormitteln (10) zum Antrieb des beweglichen Organs und Mitteln zur Auswahl (16) der Arbeitsweise der besagten Motormittel (10) vorgesehen ist.

6. Vorrichtung nach Anspruch 5, bei der die besagte Speiseleitung (35) durch zwei Kabeln (12a, 12b) gebildet ist, erlaubend jeweils die Speisung der besagten Motormittel für ein Funktionieren nach einer bestimmten Richtung, und die besagten Mittel (18, 20 ; 18, 40) zur Auswahl der Arbeitsweise der Mittel (30) zur numerischen Verarbeitung und der Positionen der Endstellung sind durch Mittel, um die besagten beiden Kabel (12a, 12b) gleichzeitig unter Spannung zu setzen, gebildet.

7. Vorrichtung nach Anspruch 6, bei der die besagten Mittel zum gleichzeitigen unter Spannung Setzen der besagten beiden Kabel (12a, 12b) einen Druckknopf (40) umfassen, geeignet, eine zwischen den besagten beiden Kabeln (12a, 12b) vorgesehene Kurzschlußlinie zu schließen.

8. Vorrichtung nach Anspruch 6, umfassend Mittel zum Bremsen (19) der besagten Motormittel (10), die durch ein Organ wie Stromunterbrecher gebildet sind, der an jedem der Kabel (12a, 12b) vorgesehen ist, geeignet, ausgehend von einem Signal ausgelöst zu werden, das durch die besagten Verarbeitungsmittel (30) ausgesendet wird.

9. Vorrichtung nach Anspruch 5, bei der die besagten Mittel zur Auswahl (16) der Arbeitsweise der Motormittel (10) und/oder die besagten Mittel zur Auswahl der Arbeitsweise der Verarbeitungsmittel (30) und der Positionen der Endstellung durch einen Schalter (18, 20) mit drei Positionen gebildet sind, der zwischen dem Netz und der Speiseleitung (35) vorgesehen ist.

## Claims

1. A device for bi-directional detection of a limit switch in a mobile element, notably a roller blind drum, fitted with means for adjusting and recording the limit switch positions thereof, said device comprising motorised means (10) for driving the mobile element, means (1) for controlling the position of the mobile element, means for comparing said position of the mobile element with the recorded limit switch positions, and digital processing means (30) capable of operating according to two different modes, one called "normal mode", the other "adjusting mode", said control means (1) being provided to give a picture of the position of the element in the form of a digitalised signal at the inlet of the processing means (30), and said means of adjustment comprising electric means (18, 20; 18, 40) for selecting the operating mode of the processing means (30) as well as limit switch positions for the memorisation thereof, said selection means (18, 20; 18, 40) being provided to enable on-the-fly adjustment of the limit switch positions, without stopping the motorised means (10) for time delay periods.

2. A device according to claim 1, wherein said processing means (30) are provided to fulfil the following functions:
- counting from the signal giving the picture of the position of the element, by one or several counters (32),
- comparing the value of the counter(s) with a value corresponding to the limit switch positions stored in a memory (33),
- storing limit switch values adjusted in said memory (33),
- commuting their operation between "normal" mode and 'adjusting' mode.

3. A device according to claim 2, wherein said processing means (30) include a microprocessor (34) capable of implementing a piece of software enabling realisation of said counting, comparing, storage and/or commuting functions.

4. A device for bi-directional driving of a mobile element fitted with a limit switch detection device according to claim 1.

5. A device according to claim 4, wherein said processing means (30) are connected by a derivation assembly on a power supply line (35) provided between the motorised means (10) for driving the mobile element and means (16) for selecting the operating mode of said motorised means (10).

6. A device according to claim 5, wherein said power supply line (35) is composed of two cables (12a, 12b) each enabling to power said motorised means for an operation according to a given direction and said means (18, 20; 18, 40) for selecting the operating mode of the digital processing means (30) as well as the limit switch positions, are composed of means for simultaneous switching on of said both cables (12a, 12b).

7. A device according to claim 6, wherein said simultaneous switching means of said both cables (12a, 12b) include a push-button (40) capable of closing a short-circuit line provided between said both cables (12a, 12b).

8. A device according to claim 6 including means (19) for locking said motorised means (10) composed of a cut-out element provided on each of the cables (12a, 12b) capable of being triggered from a signal transmitted by said processing means (30).

9. A device according to claim 5, wherein said means (16) for selecting the operating mode of the motorised means (10) and/or said means for selecting the operating means of the processing means (30) and the limit switch positions are composed of a three-position toggle switch (18, 20) provided between the mains and the power supply line (35).
